# DEMANDE DE BREVET EUROPEEN

(11) **EP 1 178 652 A1**
(43) Date de publication de la demande: **06.02.2002**
(21) Numéro de dépôt: 01401940.0
(22) Date de dépôt: 19.07.2001
(51) Int. Cl.: H04M 1/725, H04M 1/247, H04Q 7/32

(54) **Procédé de gestion automatique de services d'un réseau et système correspondant**

(30) Priorité: 03.08.2000 FR 0010262
(71) Demandeur: ALCATEL, 75008 Paris (FR)
(72) Inventeur: Helaine, Hubert, Reading, Berkshire RG5 4UH (GB); Dervaux, France, 92100 Boulogne (FR)
(74) Mandataire: El Manouni, Josiane

(57) **Abrégé**

Un téléphone (101) mobile comporte des moyens pour se connecter à un réseau de téléphonie mobile. On utilise ces moyens pour connecter ledit téléphone à une base (102) privée. Ladite base est connectée à un autre réseau (117) de téléphonie. Lorsqu'un utilisateur souhaite paramétrer des services de l'un ou l'autre des réseaux il utilise la même interface fournit par le téléphone. Lorsque le téléphone est connecté à la base, celle ci se charge de l'interfaçage entre des requête émises par le téléphone et le deuxième réseau. Un serveur (118) du deuxième réseau est donc en mesure de traiter les requêtes du téléphone mobile. La base gère les acquittements en provenance du serveur. Ces échanges peuvent être faits en ou hors ligne sans que cela soit préjudiciable à une communication.

## Description

La présente invention a pour objet un procédé de gestion automatique de services d'un réseau. Le domaine de l'invention est celui des télécommunications, et plus particulièrement de la téléphonie, qu'elle soit mobile ou fixe. Le but de l'invention est de permettre à un utilisateur qui possède un abonnement de téléphone mobile et un abonnement de téléphone fixe d'accéder aux services liés à ces abonnements et ce de manière totalement transparente. C'est-à-dire que l'utilisateur utilise le même combiné, ou terminal, pour accéder au réseau fixe ou au réseau mobile. De plus cette utilisation ne varie pas selon qu'on accède au réseau fixe ou au réseau mobile.

Dans l'état de la technique on connaît des réseaux de téléphonie fixe et des réseaux de téléphonie mobile. Chacun de ces réseaux offre un certain nombre de services. Un service est une fonctionnalité particulière offerte par un opérateur de téléphonie à ses abonnés. Parmi ces fonctionnalités on peut citer le renvoi d'appel, le blocage d'appel, la messagerie, ou d'autres services mis en oeuvre par l'opérateur. L'accès à ces services se fait en utilisant un terminal connecté au réseau en question. Le terminal en question comporte alors un clavier, une saisie d'une séquence de touches sur ce clavier permet d'accéder aux différents services offerts par l'opérateur.

De nombreux opérateurs, que ce soit en téléphonie mobile ou en téléphonie fixe, offrent des services qui ne sont pas forcément les mêmes. De plus l'accès à ces services, même pour des services identiques, ne se fait pas forcément de la même façon, ni en utilisant les mêmes codes d'accès. Un utilisateur qui a contracté deux abonnements, chez deux opérateurs différents, doit donc posséder deux terminaux connectés respectivement à chacun des opérateurs. L'utilisateur du réseau fixe doit connaître les procédures d'accès aux services du réseau fixe, et les procédures d'accès aux services du réseau de téléphonie mobile. En général, l'ergonomie des postes permettant d'accéder à un réseau fixe n'est pas optimale, ce qui conduit à des procédures non intuitives et difficiles à mémoriser. En général ces procédures d'accès consistent à taper des codes numériques dont la mémorisation n'est pas aisée. Il devra de plus connaître les procédures d'accès aux services du deuxième réseau auquel il est abonné. Il reste à cela le fait qu'il a été obligé d'acheter deux terminaux.

On connaît aussi des terminaux dans lesquels sont rassemblés des moyens pour pouvoir effectuer des communications sur un réseau de téléphonie mobile et sur un réseau de téléphonie fixe. Cela constitue une alternative à l'achat de deux appareils. On sait cependant que de tels terminaux sont coûteux car ils sont la réunion de deux autres terminaux même si le boîtier est unique. De plus l'emploi d'un tel terminal ne dispense pas d'avoir à se familiariser avec les procédures d'accès aux services offerts par les réseaux de téléphonie fixe et mobile.

L'invention résout ces problèmes en connectant un téléphone mobile, utilisant par exemple la norme GSM, à une base privée elle-même connectée à un opérateur de téléphonie fixe, par exemple sur le réseau téléphonique commuté. La liaison entre le téléphone mobile et la base privée s'effectue en utilisant des moyens propres au GSM. Selon un mode de fonctionnement choisi, le téléphone mobile se connecte automatiquement à la base privée dès qu'il arrive à sa portée. Le téléphone mobile se déconnecte de la base privée, pour se reconnecter au réseau de téléphonie mobile, dès qu'il n'est plus à la portée de la base privée. Lorsqu'il est connecté à la base privée, le téléphone mobile se comporte comme un terminal d'accès au réseau téléphonique commuté. Lorsqu'un utilisateur du téléphone mobile souhaite avoir accès à des services que ce soit de téléphonie mobile ou du réseau de téléphonie fixe, il utilise la même interface fournie par le téléphone mobile. Si le téléphone mobile est alors connecté à la base privée, le téléphone mobile envoie la requête de services à la base privée, celle-ci convertit la requête vers un format du réseau de téléphonie fixe et transmet la requête convertie à l'opérateur de téléphonie fixe. Ce changement de format s'effectue grâce à une table de conversion qui, dans l'exemple cité, est contenue dans la base privée.

Le réseau fixe renvoie alors un acquittement. Pour recevoir cet acquittement, il faut qu'il y ait établissement d'une ligne de communication, c'est-à-dire un décroché. La base de téléphonie privée établit alors cette ligne et transmet l'acquittement au téléphone mobile. Le téléphone mobile émet alors un son, sous forme d'un signal DTMF (Dual Tone Modulation Frequency, c'est-à-dire son modulé à deux fréquences) par exemple, conformément à ce dont l'utilisateur a l'habitude lorsqu'il utilise le réseau de téléphonie fixe. Dans une variante le signal sonore d'acquittement peut être diffusé par la base privée.

L'invention a donc pour objet un procédé de gestion automatique de services d'un réseau caractérisé en ce que:
- on connecte un terminal de communication d'un premier réseau à une base privée,
- on connecte la base privée à un deuxième réseau,
- on structure une mémoire pour établir une correspondance entre des codes de services du premier réseau, et des codes de services du deuxième réseau.

L'invention a également pour objet un terminal de communication, et une base privée, pour la mise en oeuvre d'un tel procédé.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration des moyens utilisés pour la mise en oeuvre de l'invention ;
- Figure 2 : une illustration d'étapes du procédé selon l'invention ;
- Figure 2a : une illustration d'une structure possible pour une trame de communication entre le terminal et la base privée ;
- Figure 2b : une illustration de menus utilisés pour la gestion de services ;
- Figue 2c : une illustration d'une structure de trame possible pour la communication entre la base privée et 'opérateur de téléphonie fixe.

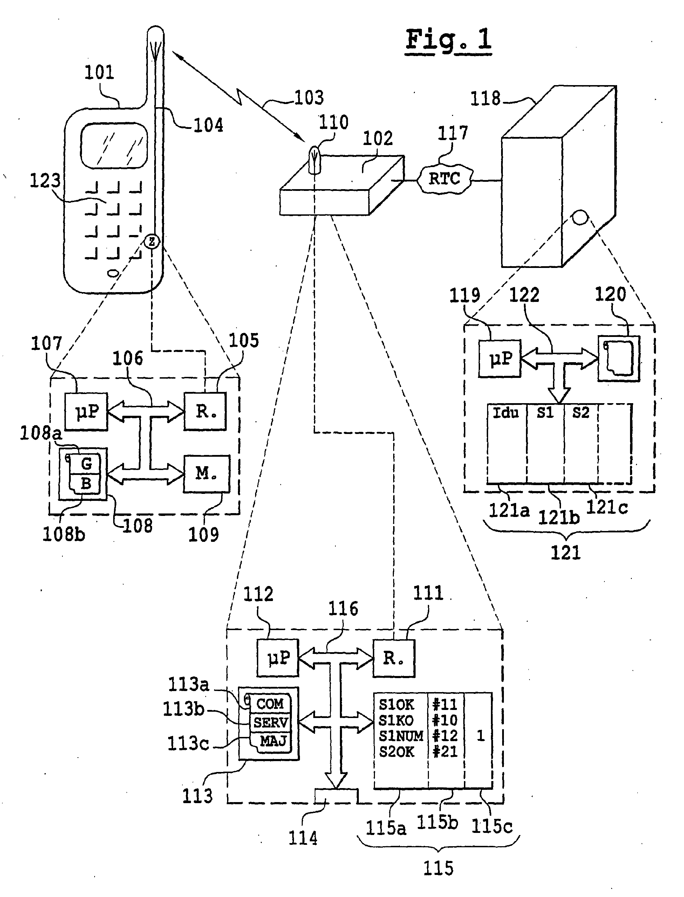

La figure 1 montre un terminal 101 de communication. Le terminal 101 est connectée à une base 102 privée. Dans un exemple préféré le terminal 101 est un téléphone mobile. Le téléphone 101 mobile peut fonctionner selon l'une des normes de téléphonie mobile existantes ou à venir. Le mode de saisie d'informations sur le téléphone 101 peut se faire soit via un clavier, soit de manière vocale, soit via toute interface existante pour saisir des informations sur un téléphone. Dans notre exemple le téléphone 101 est un téléphone GSM. Dans un exemple préféré on établit une liaison 103 entre le téléphone 101 et la base 102 en utilisant les moyens de modulation et de communication radioélectriques présents dans le téléphone 101. Ainsi le téléphone 101 peut être connecté à la base 101 ou à une station de base d'un réseau de téléphonie mobile public en utilisant les mêmes moyens. Ainsi en utilisant des moyens qu'il comporte déjà intrinsèquement, le téléphone 101 peut communiquer avec la base 102 en utilisant une porteuse proche des bandes fréquences GSM mais n'en faisant pas partie. Cette porteuse peut être aisément généré par des moyens utilisés pour le GSM. L'autre possibilité est d'émettre dans la bande GSM mais avec des puissances suffisamment faibles pour ne pas perturber les stations de base d'un réseau de téléphonie GSM public. Dans tous les cas de figure la puissance d'émission doit de toute façon être relativement faible, puisque la portée de la base 102 se mesure en quelques centaines de mètres. Ainsi la base 102 n'est pas captée par des stations de base d'un réseau de téléphonie mobile public.

Le téléphone 101 comporte donc une antenne 104 connectée à un circuit 105 de production et de réception de signaux radioélectriques. Le circuit 105 est d'autre part connecté à un bus 106. Le circuit 105 reçoit par le bus 106 des informations numériques qui lui indiquent quels signaux radioélectriques il doit produire pour les émettre via l'antenne 104. D'autre part le circuit 105 reçoit via l'antenne 104 des signaux radioélectriques qu'il démodule et qu'il place dans une mémoire du circuit 105. Cette mémoire peut être lue via le bus 106.

Dans toute la description un bus est considéré comme un ensemble de fils, ou de pistes, permettant de faire transiter des signaux correspondants à des signaux d'adresse, des signaux de données, des signaux de commande, des signaux d'interruption ou des signaux d'horloge. Le "ou" n'est ici pas exclusif.

Le téléphone 101 comporte aussi un microprocesseur 107, une mémoire 108 de programme et une mémoire 109 de données. Les éléments 107 à 109 sont eux aussi connectés au bus 106. La mémoire 108 comporte des codes d'instructions qui commandent le microprocesseur 107. La mémoire 108 comporte des codes d'instructions pour l'exécution de tâches proprement GSM, mais aussi des codes instructions pour permettre au terminal 101 de communiquer avec la base 102. Dans une variante préférée, on note qu'il s'agit aussi du meilleur mode de réalisation, ce sont des codes instructions différents qui commandent le microprocesseur 107 selon que le téléphone 101 est en communication avec un réseau de téléphonie mobile public ou avec la base 102. Cependant c'est le même circuit 105 qui est utilisé pour produire des signaux radioélectriques afin de communiquer avec le réseau de téléphonie mobile public ou avec la base 102. La mémoire 108 comporte donc au moins deux zones, une zone 108a comportant des codes d'instructions commandant le microprocesseur lorsqu'il est en mode GSM, et zone 108b comportant des codes d'instructions commandant le microprocesseur lorsqu'il est connecté à la base 102.

La mémoire 109 comporte la description de l'état des différents paramètres, et services, du téléphone 101 et du réseau auquel il est connecté. Cette description est structurée et peut être parcourue sous la forme d'un menu.

La figure 1 montre aussi que la base 102 comporte une antenne 110 connectée à un circuit 111 de production et réception de signaux radioélectriques. Le circuit 111 a un fonctionnement analogue à celui du circuit 105. La base 102 comporte d'autre part un microprocesseur 112, une mémoire 113 de programme, un port 114 de connexion et une mémoire 115 de correspondance. Les éléments 111 à 115 sont connectés à un bus 116.

Le microprocesseur 112 est commandé par des codes instructions contenus dans la mémoire 113. La mémoire 113 comporte plusieurs zones. Une zone 113a comporte des codes instructions pour commander le microprocesseur 112 lorsque la base 102 est en communication avec le terminal 101. La mémoire 113 comporte aussi une zone 113b contenant des codes instructions commandant le microprocesseur 112 lorsqu'il traite des requêtes portant sur le traitement de services. Un service est une fonctionnalité offerte par un opérateur de téléphonie. Parmi les services les plus fréquents on peut citer le renvoi d'appel ou la messagerie téléphonique. La mémoire 113 comporte aussi une zone 113c qui commande le microprocesseur 112 lorsque celui-ci effectue la mise à jour de la mémoire 115 de correspondance.

Le port 114 permet de connecter la base 102 à un réseau 117 de téléphonie fixe. Le réseau 117 peut être dans un exemple préféré au réseau téléphonique commuté.

La mémoire 115 est structurée sous la forme d'une table. La table 115comporte au moins deux colonnes, et dans un exemple préféré trois colonnes. Une première colonne 115a correspond à des codes de services reçus par la base 102, et émis par le terminal 101. Une deuxième colonne 115b fait correspondre les codes de la colonne 115a à des codes qui seront émis par la base 102 en direction d'un opérateur 118 de téléphonie fixe via le réseau 117. Une troisième colonne 115c comporte une liste de paramètres qui sont reçus par la base en même temps qu'un code de service. Cette liste correspond aux paramètres qui intéressent éventuellement l'opérateur 118 pour pouvoir traiter le code de service.

Chaque ligne de la table 115 correspond à un code de service. Dans l'exemple de la figure 1 la première ligne de la table 115 contient le code S1OK. Ce code est mis en correspondance avec le code #11 et il n'y a aucun élément correspondant au code S1OK dans la troisième colonne. Cela signifie que lorsque la base 102 reçoit le code S1OK, elle devra transmettre le code #11 sans aucun paramètre à l'opérateur. La troisième ligne de la table 115 montre que le code S1NUM correspond au code #12 avec le paramètre 1. Cela signifie que lorsque la table 102 reçoit le code S1NUM avec une liste de paramètres, elle devra transmettre le code #12 à l'opérateur avec le premier paramètre de la liste qu'elle aura reçue en même temps.

La figure 1 montre aussi que l'opérateur 118 est en fait réduit à un serveur. Cette réduction n'est pas conforme à la réalité mais permet une bonne compréhension de l'invention. Le serveur 118 comporte un microprocesseur 119, une mémoire 120 de programme et une mémoire 121 de gestion des abonnés. Les éléments 119 à 121 sont connectés par un bus 122. La mémoire 120 comporte des codes instructions qui commandent le microprocesseur 119. La mémoire 121 est structurée en table. La table 121 comporte une première colonne 121a qui correspond à un identifiant d'un abonné au réseau géré par l'opérateur 118. La colonne 121b comporte une description de l'état d'un premier service, la colonne 121c correspond à la description de l'état d'un deuxième service. La table 121 comporte donc au moins autant de colonne qu'il y a de services proposés par l'opérateur 118. Chaque ligne de la table 121 correspond à un abonné à l'opérateur 118. Dans la pratique la table 121 n'est qu'un extrait d'une table plus vaste gérée par l'opérateur 118 pour ses abonnés. Dans la pratique cette table peut avoir une structure différente du moment qu'il est possible d'accéder à des informations sur des services mis en correspondance avec des utilisateurs. Le serveur 118 est connecté au réseau 117.

On note que dans la description qui suit que lorsqu'une action est attribuée à un microprocesseur, cette action est effectuée par ledit microprocesseur commandé par des codes instructions contenus dans une mémoire.

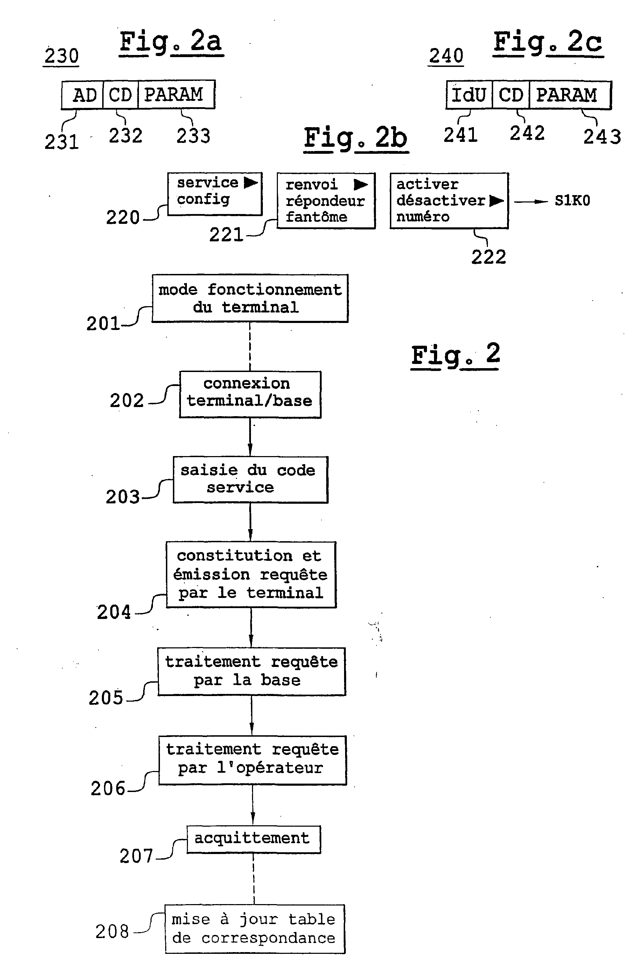

La figure 2 montre une étape 201 préliminaire où l'on choisit le mode de fonctionnement du terminal. Dans l'étape 201 l'utilisateur du téléphone 101 utilise un clavier 123 de ce téléphone pour parcourir des menus et choisir la manière dont va fonctionner le téléphone 101. Parmi les modes de fonctionnement possibles, et qui nous intéresse, il y a notamment la façon dont va se comporter le terminal 101 lorsqu'il va arriver à portée de la base 102. L'utilisateur du téléphone 101 peut en effet choisir de conserver une priorité au réseau téléphonique mobile public pour les appels sortants qu'il effectue à partir de son terminal 101, même lorsque le terminal 101 est à portée de la base 102. Cela signifie que toutes les émissions effectuées par le terminal 101 seront à destination du réseau téléphonique mobile public. L'autre solution, celle qui nous intéresse dans l'invention, consiste à choisir le mode où le téléphone 101 se connecte à la base 102 dès qu'il arrive à sa portée. La portée de la base 102 est en général de quelques centaines de mètres, 300 mètres en général. La portée de la base 102 est en général défini par la puissance d'émission de la base 102. Le mode de fonctionnement est stocké dans une mémoire qui est lue lorsque le téléphone 101 arrive à portée de la base 102. Cette mémoire est mise à jour en parcourant des menus du téléphone 101, c'est-à-dire en fait par la saisie d'une séquence de touches.

On passe à une étape 202 de connexion du terminal 101 à la base 102. Les moyens représentés à la figure 1 font apparaître que le téléphone 101 utilise les mêmes moyens pour se connecter à la base 102, ou au réseau GSM non représenté. Dans une variante de l'invention on peut envisager que le téléphone 101 comporte des moyens spécifiques pour se connecter à la base 102, de type DECT par exemple. Dans l'étape 202 on considère que le téléphone 101 est configuré pour se connecter à la base 102 lorsqu'il arrive à sa portée. Lorsque le téléphone 101 arrive à portée de la base 102, le microprocesseur devient commandé par les codes instructions contenus dans la zone 108b. Le microprocesseur 107 étant initialement commandé par des codes instructions de la zone102a, cette zone 102a comporte notamment des codes instructions pour déterminer la position du téléphone 101 relativement à la base 102. Le microprocesseur 107 paramètre alors le circuit 105 pour que celui-ci ignore tous les messages émis par le réseau téléphonique mobile public. De même le microprocesseur 107 paramètre le circuit 105 pour que celui-ci émette à une puissance suffisante pour être reçu par la base 102, mais pas suffisante pour perturber le réseau téléphonique public. Dans une variante on prévoit que les communications entre le téléphone 101 et la base 102 sont effectuées à une fréquence porteuse proche de la bande GSM afin de pouvoir être produite par les circuits 105, mais ne faisant pas partie de cette bande pour ne pas perturber le réseau téléphonique mobile public.

On passe à une étape 203 de saisie de codes de service.

Dans l'étape 203 l'utilisateur a deux possibilités. Soit il utilise des menus de configuration, soit il utilise une saisie directe du code de service. Dans le cas où il choisit d'utiliser des menus, il utilise des touches du clavier 123 pour parcourir ces menus. La figure 2b montre un exemple d'un menu possible. L'utilisateur appuie sur une touche prédéterminée sur le clavier 123 pour accéder à un menu 220 général du téléphone 101. Ce menu 220 offre deux possibilités, soit gérer les services, soit gérer la configuration du téléphone 101. L'utilisateur utilise des touches de curseur du terminal 101 pour sélectionner le choix service. L'utilisateur valide ce choix, par appui d'une touche sur une touche de validation, et il arrive alors dans un menu 221 de gestion des services. Le menu 221 offre plusieurs possibilités, par exemple gérer le renvoi d'appel, gérer le répondeur ou gérer le mode fantôme. L'utilisateur sélectionne la gestion du renvoi d'appel et arrive dans un menu 222 de gestion du renvoi d'appel. Dans le menu 222 l'utilisateur se sert des touches de curseur pour sélectionner l'action qu'il souhaite effectuer, à savoir dans notre exemple activer, désactiver ou paramétrer le numéro du renvoi d'appel. Dans notre exemple l'utilisateur choisit l'action désactiver, ce qui correspond au code S1KO.

L'utilisateur peut aussi choisir de saisir directement le code de service. Dans ce cas il saisit avec le clavier 123 le code de service. Il peut soit saisir directement S1KO s'il connaît le code de service propre à la désactivation du renvoi d'appel pour le terminal 101. L'utilisateur peut aussi directement saisir le code de désactivation du renvoi d'appel correspondant à l'opérateur 118 auquel la base 102 est connectée. Dans ce cas l'utilisateur saisit directement #10.

On passe à une étape 204 de constitution et d'émission d'une requête par le terminal 101. Dans cette étape le microprocesseur 107, commandé par des codes d'instruction de la mémoire 108b, constitue une requête 230. La requête 230 comporte au moins un champ 231 correspondant à un identifiant de la base 102, un champ 232 contenant le code de service, et un champ 233 contenant éventuellement des paramètres correspondant au code de service. L'identifiant 231 de la base peut être un format quelconque. On peut par exemple envisager une clé numérique codée sur plusieurs octets. L'existence de ce champ se justifie dans l'hypothèse où le téléphone 101 serait à portée de plusieurs bases du type 102. Il faudrait alors que les bases sachant à qui est connecté le téléphone 101.

Dans notre exemple le champ 232 comporte le code S1KO car l'utilisateur a choisi la saisie du code de service par le mode menu, sinon il comporte ce qu'a saisi l'utilisateur. La validation d'une saisie de l'utilisateur se fait par une touche prédéterminée. Dans notre exemple le champ 233 ne contient pas de paramètre puisque l'action que souhaite effectuer l'utilisateur n'appelle pas la saisie de paramètre. Si l'utilisateur avait choisit de paramétrer le numéro du renvoi d'appel, le champ 233 paramètre aurait contenu le numéro vers lequel l'utilisateur souhaitait voir ses appels être renvoyés.

Une fois que la requête est constituée dans une mémoire de travail, le microprocesseur 107 transmet cette requête au circuit 105 qui va la transformer en signal radio électrique qui vont être émis par l'antenne 104 et ainsi reçus par la base 102 via la liaison 103.

On passe à une étape 205 de traitement de la requête par la base 102. L'antenne 110 capte les signaux radio électriques émis par le terminal 101, et le circuit 111 transforme ces signaux radio électriques en signaux numériques que le microprocesseur 112 peut traiter. Le microprocesseur 112, sous le contrôle de code instruction de la mémoire 113a, constate qu'il vient de recevoir un message qui est adressé à la base 102, grâce au contenu du champ 231, et concernant un code de service. Le microprocesseur 112 est alors commandé par des codes instructions contenus dans la zone 113b de gestion des services. Le microprocesseur 112 sous le contrôle de code instruction contenu dans la zone 113b extrait donc, de la requête qu'il a reçue, le champ 232. Une fois qu'il a extrait ce champ il parcourt la colonne 115a à la recherche du code contenu dans le champ 232.

Si au cours de ce parcourt le microprocesseur trouve le code 232 dans la colonne 115a il constitue une requête 240, la requête 240 comporte un champ identifiant l'abonné à l'opérateur 118, un champ 242 comportant un code de service, et un champ 243 comportant des paramètres liés au code 242. Dans le champ 242 le microprocesseur écrit le code de la colonne 115b correspondant au code 232 dans la colonne 115a. Le champ 241 comporte un identifiant de l'abonné vis-à-vis de l'opérateur 118. Cet identifiant peut être le numéro d'appel de la ligne fixe de l'abonné. Dans la pratique cet identifiant est stocké dans une mémoire de la base 102. Cette mémoire de stockage de l'identifiant est paramétrée lors de l'installation de la base 102 de l'opérateur 118.

Si le microprocesseur 112 ne parvient pas à identifier le code 232 dans la colonne 115a alors il écrit directement le code 232 dans le champ 242.

Puis le microprocesseur consulte la colonne 115c correspondant au code 232 dans la colonne 115a. Il extrait alors du champ 233 les paramètres qui sont cités dans la colonne 115c et il les place dans le champ 243. Dans notre exemple le code instruction est celui de la deuxième ligne c'est à dire le code S1KO qui correspond au code #10 et qui ne nécessite pas de paramètres. Le champ 242 contiendra donc le code #10 et le champ 243 sera vide.

Si la base 102 avait reçu une requête avec le champ 232 contenant le code S1, alors le microprocesseur aurait constitué une autre requête avec le champ 242 contenant le code #12 et il aurait extrait le premier paramètre du champ 233 pour le placer dans le champ 243.

Si au cours du parcours de la colonne 115a le microprocesseur 112 n'a pas pu appareiller le contenu du champ 232 avec un élément de ladite colonne, alors le microprocesseur 112 retranscrit les champs 242, respectivement 243, les champs 232, respectivement 242.

Une fois que la requête 240 est constituée, le microprocesseur 112 transmet au port 114, la requête 240 transite alors via le réseau 117 jusqu'à l'opérateur 118. On passe à une étape 206 de traitement de la requête par l'opérateur.

Dans l'étape 206, le microprocesseur 119 recherche le contenu du champ 241 dans la colonne 121a. Une fois qu'il l'a trouvé, il recherche dans la ligne correspondante le contenu du champ 242. Puis il met alors à jour le champ correspondant. Cela signifie que le microprocesseur 119 met la table 121 à jour en fonction des requêtes que le serveur 118 reçoit. Le microprocesseur peut ainsi parcourir la table 115 pour savoir comment il doit se comporte face à un appel entrant pour un abonné présent dans la table 115. Si le renvoi d'appel est décrit comme activé, alors les appels entrants seront redirigés vers un autre numéro lui aussi enregistré dans la table 115. Dans l'exemple que nous avons choisit de traiter, il s'agit de désactiver un renvoi d'appel. Cela signifie que les appels en direction du numéro fixe de l'abonné ne seront plus déroutés vers un autre numéro que le sien. Une fois qu'il a effectué cette mise à jour l'opérateur 118 envoie un acquittement. C'est l'étape 207 d'acquittement.

En règle générale la transmission d'informations sur un réseau de téléphonie fixe, tel que le réseau 117, nécessite qu'il y ait eu un décroché c'est à dire une prise de ligne. C'est la base 102 qui s'occupe d'effectuer cette prise de ligne. Cela lui permet d'envoyer la requête 240 et de recevoir l'acquittement de la part de l'opérateur 118. Une fois que la base 102 a reçue l'acquittement elle peut alors décrocher. Cette opération est totalement transparente pour l'utilisateur du téléphone 101. Une fois que la base 102 a reçu l'acquittement de la part de l'opérateur 118 elle libère la ligne. Cet acquittement est en général transmit sous la forme d'un code DTMF. Il est alors possible que la base 102 elle-même diffuse le son correspondant au code DTMF, ou qu'elle transmette au terminal 101 une requête pour que celui-ci émette lui-même le son correspondant au code DTMF. Dans une variante préférée on choisit la deuxième solution à savoir la transmission d'une requête par la base 102 pour que le terminal émette un son correspondant au code DTMF. En effet l'utilisateur du terminal 101 n'est pas toujours à portée auditive de la base 102.

Dans le cas où la requête de service doit être émise alors que l'utilisateur est en ligne, on interrompt la connexion entre l'utilisateur et son correspondant pendant la transmission des signaux nécessaires à l'acheminement de la requête et de l'acquittement. Les interruptions sont très brèves et ne perturbent pas la communication entre l'utilisateur et son correspondant.

On note que l'utilisateur du téléphone 101, même si et dans le mode de connexion automatique à la base 102, on peut expressément spécifier au terminal 101 d'envoyer une requête au réseau de téléphonie mobile publique auquel il est abonné pour modifier ces services sur ce réseau. Pour le cas où l'utilisateur du téléphone 101 n'est pas dans le mode connexion automatique à la base 102, les requêtes émises par le terminal 101 pour la modification de services sont destinées au réseau de téléphonie mobile publique auquel le terminal est alors connecté. Cela est vrai même si le terminal 101 est à portée de la base 102.

La figure 2 montre aussi l'étape 208 de mise à jour de la table 115 de correspondance. Il y a plusieurs possibilités pour l'étape 208. Dans une première possibilité la mémoire 115 est contenue dans une puce elle-même située sur une carte. Cette carte à puce est donc mise en place à la livraison de la base 102. La mémoire de la carte à puce est alors mise à jour en usine, et en fonction des services et des opérateurs auxquels a choisi de s'abonner le destinataire de la carte à puce. En effet il est possible d'effectuer toutes les combinaisons possibles entre un opérateur de téléphonie mobile existant et un opérateur de téléphonie fixe existant. La table 115 peut donc tenir compte de toutes les possibilités.

Une autre possibilité, cumulable avec la première, consiste en ce que la base appelle périodiquement le serveur 118. Le serveur 118 possède alors des informations qui lui permettent de savoir à quel opérateur de téléphonie mobile est abonné l'utilisateur de la base qui l'appelle. Il envoie alors des informations qui permettent à la base 102 de mettre elle-même à jour la mémoire 115. Cet appel peut être effectué de manière périodique et paramétrable par l'utilisateur de la base 102.

Une troisième possibilité, cumulable avec les deux précédentes, consiste à notifier à l'utilisateur de la base 102 d'une manière quelconque qu'il doit mettre à jour sa mémoire 115. Cette notification peut être sous la forme d'une nouvelle carte à puce à insérer dans la base 102, ou d'un message lui indiquant qu'il doit déclencher la mise à jour de la mémoire 115. Le message peut être, par exemple, une missive postale. Ce déclenchement se fait alors par la rédaction d'une option dans le menu du téléphone 101. La base 102 se connecte alors à l'opérateur 118 et effectue la mise à jour de la mémoire 115.

Dans une variante de l'invention la mémoire 115 est contenue dans le téléphone 101. Dans ce cas de figure les traitements initialement faits par la base 102 sont alors fait par le téléphone 101. On économise ainsi la constitution de la trame230. Le téléphone 101 constitue la trame 240, il transmet cette trame à la base 102. La base 102 relaie cette trame 240 jusqu'à l'opérateur 118. Puis la base 102 gère l'acquittement, c'est l'étape 207. La mise à jour de la table 115 peut alors s'effectuer de la même manière que si la table 115 se trouvait dans la base 102.

Dans une autre variante de l'invention, et ou que soit située la table 115, la mis à jour de ladite table peut s'effectuer par une liaison avec le premier réseau. Le téléphone stocke alors la nouvelle version de la table 115 dans une mémoire temporaire, puis met à jour la table de la base 102 en fonction de cette nouvelle version. Si la dite table est contenue dans le téléphone 101, on peut se passer de la mémoire temporaire pour mettre directement à jour ladite table.

Outre un tel procédé, la présente invention a également pour objet, notamment, un terminal de communication, et une base privée, comportant des moyens pour mettre en oeuvre un tel procédé.

## Revendications

1. Procédé de gestion automatique de services d'un réseau **caractérisé en ce que**:
- on connecte (202) un terminal (101) de communication d'un premier réseau à une base (102) privée,
- on connecte la base privée à un deuxième réseau (117),
- on structure une mémoire (115) pour établir une correspondance entre des codes de services du premier réseau, et des codes de services du deuxième réseau.

2. Procédé selon la revendication 1, **caractérisé en ce que** la mémoire de correspondance est contenue dans le terminal de communication.

3. Procédé selon la revendication 1, **caractérisé en ce que** la mémoire de correspondance est contenue dans la base privée.

4. Procédé selon la revendication 3, **caractérisé en ce que**:
- on constitue (204) une requête (230) correspondant à un service à partir du terminal de communication,
- on émet (204) la requête depuis le terminal de communication et on la reçoit sur la base privée,
- on effectue (205), dans la base privée, une mise en forme de la requête en fonction de la mémoire de correspondance,
- on émet (205) la requête sur le deuxième réseau, la requête est reçue par un opérateur gérant les services du deuxième réseau.

5. Procédé selon la revendication 4, **caractérisé en ce que** s'il n'existe pas de correspondance, dans la mémoire de correspondance, pour la requête émise par le terminal de communication, on transmet la requête sans mise en forme à un opérateur gérant les services du deuxième réseau.

6. Procédé selon l'une des revendications 4 ou 5, **caractérisé en ce qu'**après traitement de la requête par un opérateur gérant les services du deuxième réseau, on reçoit un acquittement sur le terminal de communication.

7. Procédé selon l'une des revendications 4 à 6, **caractérisé en ce qu'**après traitement de la requête par un opérateur gérant les services du deuxième réseau, on reçoit (207) un acquittement sur la base privée.

8. Procédé selon l'une des revendications 1 à 7, **caractérisé en ce qu'**on met à jour (208) la mémoire de correspondance au cours d'une communication entre la base privée et un opérateur du deuxième réseau.

9. Procédé selon l'une des revendications 1 à 8, **caractérisé en ce qu'**on met à jour la mémoire de correspondance au cours d'une communication entre le terminal de communication et un opérateur du premier réseau.

10. Procédé selon l'une des revendications 8 ou 9, **caractérisé en ce que** la mise à jour de la mémoire de correspondance est effectuée automatiquement de manière périodique.

11. Procédé selon l'une des revendications 8 à 10, **caractérisé en ce que** la mise à jour est déclenchée par un utilisateur.

12. Procédé selon l'une des revendications 1 à 11 **caractérisé en ce que** le premier réseau est un réseau de téléphonie mobile.

13. Procédé selon l'une des revendications 1 à 12 **caractérisé en ce que** le deuxième réseau est un réseau de téléphonie fixe.

14. Procédé selon l'une des revendications 1 à 13, **caractérisé en ce que**:
- on choisit de désactiver un mode de connexion automatique du terminal de communication mobile à la base privée lorsque le terminal est à portée de la base.

15. Terminal de communication, comportant des moyens pour mettre en oeuvre un procédé selon l'une des revendications 1 à 14.

16. Base privée, comportant des moyens pour mettre en oeuvre un procédé selon l'une des revendications 1 à 14.
